# EUROPEAN PATENT APPLICATION

(11) **EP 4 292 457 A1**
(43) Date of publication of application: **20.12.2023**
(21) Application number: 21936877.6
(22) Date of filing: 12.04.2021
(51) Int. Cl.: A24F 40/50

(54) **CONTROL DEVICE, CONTROL METHOD, AND PROGRAM**

(71) Applicant: Japan Tobacco, Inc., Tokyo, 105-6927 (JP)
(72) Inventor: SUGANO, Yuka, Tokyo 130-8603 (JP); SERITA, Kazutoshi, Tokyo 130-8603 (JP); SENJU, Masatoshi, Tokyo 130-8603 (JP)
(74) Representative: Hoffmann Eitle
(86) International application number: PCT/JP2021/015152
(87) International publication number: WO 2022/219673

(57) **Abstract**

[Problem] To provide an arrangement capable of ensuring improved usability when the amount of residual electric power is low. [Solution] This control device is for controlling the operation of an inhalation device. The inhalation device is provided with: a power supply unit for storing and supplying electric power, and a generation unit for generating an aerosol from an aerosol source in accordance with operating settings. The control device is provided with an operation control unit that controls changes in the operation settings when the amount of residual electric power in the power supply unit is less than a first threshold value corresponding to consumption power required to perform a specified number of times of a process for generating an aerosol from the aerosol source in accordance with the set operation settings.

## Description

### Technical Field

The present invention relates to a control device, a control method, and a program.

### Background Art

Inhaler devices that generate material to be inhaled by users, such as electronic cigarettes and nebulizers, are widespread. For example, an inhaler device uses a substrate containing an aerosol source for generating an aerosol, a flavor source for imparting a flavor component to the generated aerosol, and the like, to generate the aerosol having the flavor component imparted. The user can taste a flavor by inhaling the aerosol generated by the inhaler device and having the flavor component imparted.

In recent years, technical developments have been made with the aim of further improving the quality of the user's experience when using inhaler devices. For example, Patent Literature 1 below discloses a technique in which an aerosol is not generated when an inhaler device has a remaining electric power insufficient to consume one unused substrate.

### Citation List

### Patent Literature

Patent Literature 1: JP 2015-534458 A

### Summary of Invention

### Technical Problem

However, if the aerosol is not uniformly generated when the remaining electric power decreases, usability may be significantly lowered.

The present invention is made in view of the above problem, and an object of the present invention is to provide a mechanism capable of improving usability when the remaining electric power decreases.

### Solution to Problem

To address the above-described problem, an aspect of the present invention provides a control device that controls operation of an inhaler device. The inhaler device includes a power supply that stores and supplies electric power, and a generator that generates an aerosol from an aerosol source in accordance with an operation setting. The control device includes an operation controller that controls change of the operation setting when a remaining electric power of the power supply is less than a first threshold corresponding to a power consumption required for executing processing of generating the aerosol from the aerosol source a prescribed number of times in accordance with the operation setting that has been set.

The operation controller may determine the operation setting corresponding to the remaining electric power of the power supply as a post-change operation setting.

The operation controller may determine the operation setting that matches a condition designated by a user as the post-change operation setting.

The condition may relate to at least one of a characteristic of the aerosol to be generated, a length of time during which the aerosol can be generated, or a number of times the aerosol can be inhaled when the generator operates in accordance with the post-change operation setting.

The operation controller may control processing of providing information related to the post-change operation setting.

The information related to the post-change operation setting may include at least one of a characteristic of the aerosol to be generated, a length of time during which the aerosol can be generated, or a number of times the aerosol can be inhaled when the generator operates in accordance with the post-change operation setting.

The operation controller may specify one or more operation settings corresponding to the remaining electric power of the power supply as one or more candidates for the post-change operation setting, and determine, as the post-change operation setting, the candidate with consent obtained from a user to be determined as the post-change operation setting among the one or more candidates.

The operation controller may control processing of providing information related to the one or more candidates.

The information related to the candidate may include at least one of a characteristic of the aerosol to be generated, a length of time during which the aerosol can be generated, or a number of times the aerosol can be inhaled when the generator operates in accordance with the candidate.

The operation controller may control operation of the generator so as to operate in accordance with the post-change operation setting.

When a first user input is performed, the operation controller may control the operation of the generator so as to operate in accordance with the post-change operation setting.

The first user input may be attaching a substrate to be used for generating the aerosol to the inhaler device.

When the first user input is not performed or when a second user input is performed, the operation controller may prohibit the operation of the generator

The operation controller may operate in one operation mode of a first operation mode or a second operation mode, control the change of the operation setting when the operation controller operates in the first operation mode and when the remaining electric power of the power supply is less than the first threshold, and prohibit the operation of the generator when the operation controller operates in the second operation mode and when the remaining electric power of the power supply is less than the first threshold.

The operation controller may operate in one operation mode of a third operation mode or a fourth operation mode when the operation controller operates in the first operation mode, determine the operation setting corresponding to the remaining electric power of the power supply as the post-change operation setting without obtaining consent from a user when the operation controller operates in the third operation mode, and determine the operation setting corresponding to the remaining electric power of the power supply as the post-change operation setting with the consent obtained from the user when the operation controller operates in the fourth operation mode.

The operation controller may prohibit the operation of the generator when the remaining electric power of the power supply is less than a second threshold that is smaller than the first threshold.

The operation controller may set the second threshold based on at least one of a length of time during which the aerosol can be generated or a number of times the aerosol can be inhaled, designated by the user.

The operation setting may be a setting related to a temperature at which the aerosol source is heated.

Also, to address the above-described problem, another aspect of the present invention provides a control method for controlling operation of an inhaler device including a power supply that stores and supplies electric power and a generator that generates an aerosol from an aerosol source in accordance with an operation setting. The control method includes controlling change of the operation setting when a remaining electric power of the power supply is less than a first threshold corresponding to a power consumption required for executing processing of generating the aerosol from the aerosol source a prescribed number of times in accordance with the operation setting that has been set.

Also, to address the above-described problem, still another aspect of the present invention provides a program for causing a computer that controls operation of an inhaler device including a power supply that stores and supplies electric power and a generator that generates an aerosol from an aerosol source in accordance with an operation setting, to execute controlling change of the operation setting when a remaining electric power of the power supply is less than a first threshold corresponding to a power consumption required for executing processing of generating the aerosol from the aerosol source a prescribed number of times in accordance with the operation setting that has been set.

### Advantageous Effects of Invention

As described above, according to the present invention, the mechanism capable of improving usability when the remaining electric power decreases is provided.

### Brief Description of Drawings

[Fig. 1] Fig. 1 is a schematic diagram of an inhaler device according to an internal configuration example.
[Fig. 2] Fig. 2 is an overall perspective view of the inhaler device according to the present embodiment.
[Fig. 3] Fig. 3 is an overall perspective view of the inhaler device according to the present embodiment in a state in which a stick substrate is held.
[Fig. 4] Fig. 4 is a diagram illustrating an example of a configuration of a system according to the present embodiment.
[Fig. 5] Fig. 5 is a graph presenting an example of a time-series transition of an actual temperature of a heater operated based on a heating profile presented in Table 1.
[Fig. 6] Fig. 6 is a graph presenting an example of a time-series transition of the actual temperature of the heater operated based on a heating profile presented in Table 2.
[Fig. 7] Fig. 7 is a flowchart presenting an example of a flow of processing executed in the system according to the present embodiment.
[Fig. 8] Fig. 8 is a flowchart presenting an example of a flow of processing executed in the system according to the present embodiment.

### Description of Embodiments

Hereinafter, preferred embodiments of the present invention will be described in detail with reference to the accompanying drawings. In this description and the drawings, structural elements having substantially the same functional configuration are denoted by the same reference numeral, and redundant description thereof will be omitted.

### 1. Configuration example of inhaler device

An inhaler device generates material to be inhaled by a user. In the example described below, the material generated by the inhaler device is an aerosol. Alternatively, the material generated by the inhaler device may be gas.

### (1) Internal configuration example

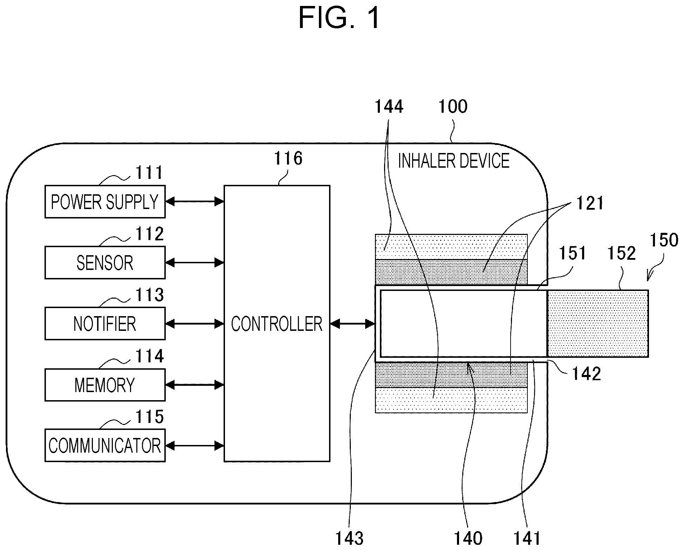

Fig. 1 is a schematic diagram of the inhaler device according to the internal configuration example. As illustrated in Fig. 1, an inhaler device 100 according to the present configuration example includes a power supply 111, a sensor 112, a notifier 113, a memory 114, a communicator 115, a controller 116, a heater 121, a holder 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a microphone condenser, a flow sensor, or a temperature sensor, and acquire a value generated in accordance with the user's inhalation. In another example, the sensor 112 may be an input device that receives information input by the user, such as a button or a switch.

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark) or Bluetooth (registered trademark).

The controller 116 functions as an arithmetic processing unit and a control circuit, and controls the overall operations of the inhaler device 100 in accordance with various programs. The controller 116 includes an electronic circuit such as a central processing unit (CPU) and a microprocessor, for example.

The holder 140 has an internal space 141, and holds a stick substrate 150 in a manner partially accommodated in the internal space 141. The holder 140 has an opening 142 that allows the internal space 141 to communicate with outside. The holder 140 holds the stick substrate 150 that is inserted into the internal space 141 through the opening 142. For example, the holder 140 may be a tubular body having the opening 142 and a bottom 143 on its ends, and may define the pillar-shaped internal space 141. The holder 140 also has a function of defining a flow path of air supplied to the stick substrate 150. For example, the bottom 143 has an air inlet hole that is an inlet of air into the flow path. On the other hand, an air outlet hole that is an outlet of the air from the flow path is the opening 142.

The stick substrate 150 includes a substrate 151 and an inhalation port 152. The substrate 151 includes an aerosol source. In this configuration example, the aerosol source is not limited to a liquid, but may be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 from the air inlet hole (not illustrated), and the air and an aerosol generated from the substrate 151 reach inside the mouth of the user

The heater 121 heats the aerosol source to atomize the aerosol source and generate the aerosol. In the example illustrated in Fig. 1, the heater 121 has a film-like shape and surrounds the outer circumference of the holder 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the holder 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the holder 140. In still another example, the heater 121 may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. Examples of the opening/closing mechanism include a hinge. In addition, the holder 140 may hold the stick substrate 150 while sandwiching the stick substrate 150 inserted into the internal space 141 by opening and closing the outer shell. In this case, the heater 121 may be at the sandwiching position of the holder 140 and may produce heat while pressing the stick substrate 150.

In addition, means for atomizing the aerosol source is not limited to heating by the heater 121. For example, the means for atomizing the aerosol source may be induction heating.

### (2) Configuration example of appearance

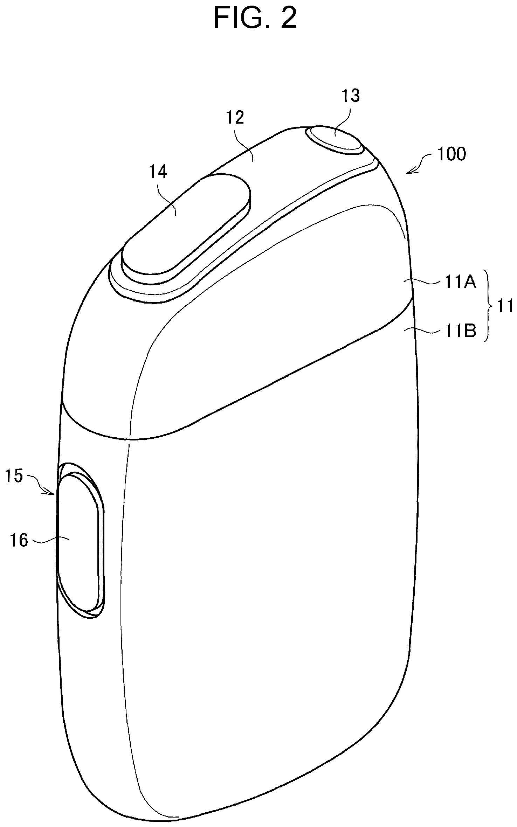

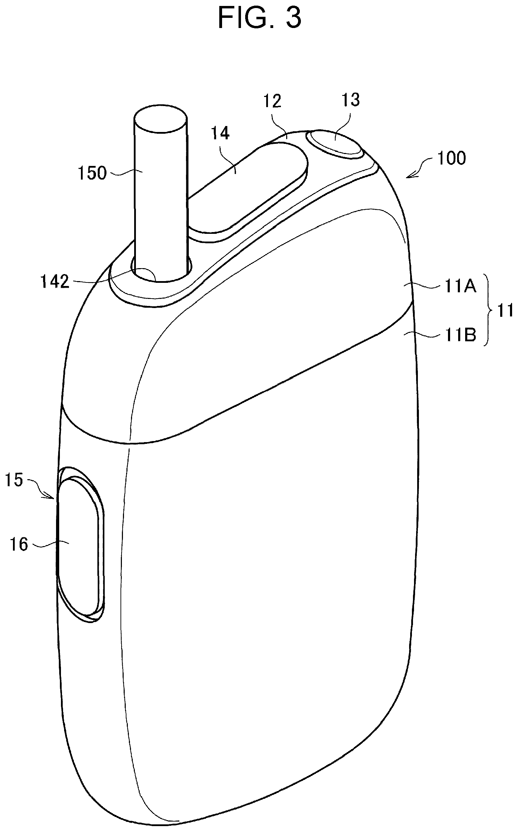

Fig. 2 is an overall perspective view of the inhaler device 100 according to the present embodiment. Fig. 3 is an overall perspective view of the inhaler device according to the present embodiment in a state in which the stick substrate 150 is held.

As illustrated in Fig. 2 and Fig. 3, the inhaler device 100 includes a top housing 11A, a bottom housing 11B, a cover 12, a switch 13, a lid 14, a vent 15, and a cap 16. The top housing 11A and the bottom housing 11B are connected to each other to define an outermost outer housing 11 of the inhaler device 100. The outer housing 11 has a size to fit in a hand of the user. When the user uses the inhaler device 100, the user can hold the inhaler device 100 with his/her hand and inhale a flavor.

The top housing 11A has an opening (not illustrated), and the cover 12 is coupled to the top housing 11A so as to close the opening. As illustrated in Fig. 3, the cover 12 exposes the opening 142 into which the stick substrate 150 can be inserted. The lid 14 is configured to open and close the opening 142. Specifically, the lid 14 is attached to the cover 12 and is configured to be movable along a surface of the cover 12 between a first position at which the lid 14 closes the opening 142 and a second position at which the lid 14 opens the opening 142. Accordingly, the lid 14 can permit or restrict an access of the stick substrate 150 to the inside (the internal space 141 illustrated in Fig. 1) of the inhaler device 100. A state in which the lid 14 is located at the second position and the lid 14 opens the opening 142 is hereinafter also referred to as an open state. A state in which the lid 14 is located at the first position and the lid 14 closes the opening 142 is hereinafter also referred to as a closed state.

The switch 13 is used to switch ON and OFF the operation of the inhaler device 100. For example, when the user operates the switch 13 in a state in which the stick substrate 150 is inserted into the internal space 141 through the opening 142 as illustrated in Fig. 3, electric power is supplied from the power supply 111 to the heater 121, and the stick substrate 150 can be heated without being combusted. When the stick substrate 150 is heated, an aerosol is generated from the aerosol source contained in the stick substrate 150, and a flavor of a flavor source is taken into the aerosol. The user can inhale the aerosol containing the flavor by inhaling a portion (a portion illustrated in Fig. 3, that is, the inhalation port 152) of the stick substrate 150 protruding from the inhaler device 100.

The vent 15 is for introducing air into the internal space 141. The air taken into the inside of the inhaler device 100 from the vent 15 is introduced into the internal space 141 from, for example, the air inlet hole formed in the bottom 143 of the holder 140. The cap 16 is configured to be detachably attached to the bottom housing 11B. When the cap 16 is attached to the bottom housing 11B, the vent 15 is formed between the bottom housing 11B and the cap 16. The cap 16 may have, for example, a through hole, a notch, or the like (not illustrated). In the present description, the longitudinal direction of the inhaler device 100 refers to a direction in which the stick substrate 150 is inserted into the opening 142. Also, in the inhaler device 100 of the present description, a side where a fluid such as air flows in (for example, the vent 15 side) is referred to as an upstream side, and a side where the fluid flows out (for example, the opening 142 side) is referred to as a downstream side.

### (3) Supplement

The inhaler device 100 according to the present embodiment generates an aerosol that is inhaled by a user using a substrate. The heater 121 is an example of a generator that generates an aerosol. The stick substrate 150 is an example of a substrate according to the present invention. Hereinafter, user's inhalation of an aerosol generated by the inhaler device 100 is also simply referred to as "inhalation" or "puff". Also, the action of the user inhaling the aerosol is also referred to as a puff action.

The inhaler device 100 generates an aerosol using a substrate attached to the inhaler device 100. The substrate typically contains an aerosol source. The substrate may contain a flavor source for imparting a flavor to the aerosol together with or instead of the aerosol source. The stick substrate 150 inserted into the inhaler device 100 is an example of a substrate attached to the inhaler device 100. When the aerosol source or the flavor source contained in the attached substrate is depleted, the substrate is replaced with a new substrate.

### 2. Technical features

### (1) Configuration example of system

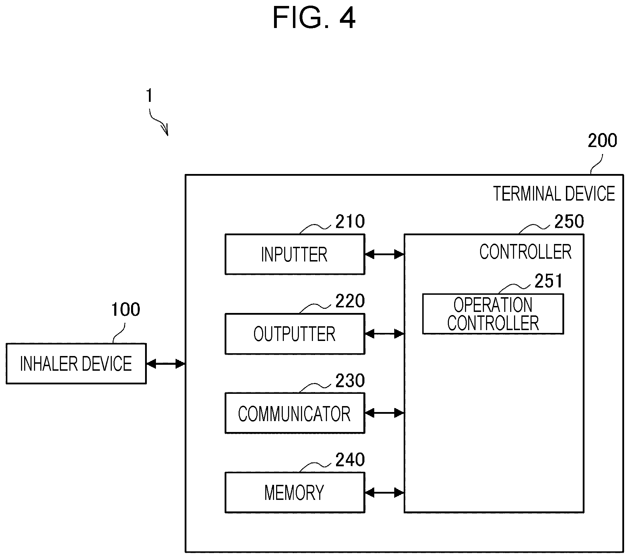

Fig. 4 is a diagram illustrating an example of a configuration of a system 1 according to the present embodiment. As illustrated in Fig. 4, the system 1 includes the inhaler device 100 and a terminal device 200. The configuration of the inhaler device 100 is as described above.

The terminal device 200 is used by the user of the inhaler device 100. For example, the terminal device 200 is constituted by any information processing device, such as a smartphone, a tablet terminal, or a wearable device. As illustrated in Fig. 4, the terminal device 200 includes an inputter 210, an outputter 220, a communicator 230, a memory 240, and a controller 250.

The inputter 210 has a function of receiving an input of various items of information. The inputter 210 may include an input device that receives an input of information from the user. Examples of the input device include a button, a keyboard, a touch panel, and a microphone. In addition, the inputter 210 may include various sensors such as an image sensor

The outputter 220 has a function of outputting information. The outputter 220 may include an output device that outputs information to the user. Examples of the output device include a display device that displays information, a light-emitting device that emits light, a vibration device that vibrates, and a sound output device that outputs sound. An example of the display device is a display. An example of the light-emitting device is a light emitting diode (LED). An example of the vibration device is an eccentric motor. An example of the sound output device is a speaker. The outputter 220 outputs information input from the controller 250 to notify the user of the information.

The communicator 230 is a communication interface for transmitting and receiving information between the terminal device 200 and another device. The communicator 230 performs communication in conformity with any wired or wireless communication standard. Such a communication standard may be, for example, wireless local area network (LAN), wired LAN, Wi-Fi (registered trademark), or Bluetooth (registered trademark).

The memory 240 stores various items of information for operation of the terminal device 200. The memory 240 may be a non-volatile storage medium such as flash memory.

The controller 250 functions as an arithmetic processing unit or a control circuit, and controls the overall operations of the terminal device 200 in accordance with various programs. The controller 250 includes an electronic circuit, such as a central processing unit (CPU) or a microprocessor, for example. In addition, the controller 250 may include a read only memory (ROM) that stores a program to be used, calculation parameters, and the like, and a random access memory (RAM) that temporarily stores parameters that change as appropriate. The terminal device 200 executes various processing under the control of the controller 250. Examples of the processing controlled by the controller 250 include processing of information input by the inputter 210, an output of information by the outputter 220, transmission and reception of information by the communicator 230, and storage and reading of information by the memory 240. The controller 250 also controls other processing executed by the terminal device 200, such as an input of information to each structural element and processing based on information output from each structural element.

Note that the function of the controller 250 may be implemented using an application. The application may be preinstalled or may be downloaded. Alternatively, the function of the controller 250 may be implemented by progressive web apps (PWA).

The controller 250 according to the present embodiment includes an operation controller 251. The operation controller 251 has a function of controlling operation of the inhaler device 100. Specifically, the operation controller 251 controls the operation of the inhaler device 100 in accordance with the remaining electric power of the power supply 111. The operation controller 251 collects information related to the inhaler device 100 such as the remaining electric power of the power supply 111 from the inhaler device 100 via the communicator 230. An example of the remaining electric power of the power supply 111 is a state of charge (SOC) of the power supply 111. Another example of the remaining electric power of the power supply 111 is the voltage of the power supply 111. The operation controller 251 transmits information for controlling the operation of the inhaler device 100 to the inhaler device 100 via the communicator 230. In this way, the operation controller 251 controls the operation of the inhaler device 100. Also, the operation controller 251 may control the operation of the inhaler device 100 based on information input to the inputter 210 by the user, or may output information related to the operation of the inhaler device 100 by the outputter 220. The terminal device 200 including the operation controller 251 is an example of a control device according to the present embodiment.

### (2) Heating profile

The inhaler device 100 generates an aerosol from an aerosol source in accordance with a heating profile. When the inhaler device 100 generates the aerosol by heating the aerosol source, the heating profile is a setting related to the temperature at which the aerosol source is heated. The heating profile is an example of an operation setting according to the present embodiment.

The heating profile is information indicating a time-series transition of a target value for a value measured for the heater 121 (hereinafter, also referred to as an actual measurement value). The inhaler device 100 controls the operation of the heater 121 so that a time-series transition of an actual measurement value measured for the heater 121 becomes similar to the time-series transition of the target value defined in the heating profile. Accordingly, an aerosol is generated as planned in the heating profile. The heating profile is typically designed to optimize the flavor that the user tastes when the user inhales the aerosol generated from the stick substrate 150. Thus, by controlling the operation of the heater 121 based on the heating profile, it is possible to optimize the flavor that the user tastes.

### - Heating profile related to temperature

The actual measurement value may be the temperature of the heater 121. In this case, the heating profile is information that defines a time-series transition of a target temperature that is a target value for the temperature of the heater 121. The inhaler device 100 controls the temperature of the heater 121 so that a time-series transition of an actually measured temperature (hereinafter, also referred to as an actual temperature) of the heater 121 becomes similar to the time-series transition of the target temperature defined in the heating profile. As a result, it is possible to optimize the flavor that the user tastes.

The heating profile includes one or more combinations of an elapsed time since a start of heating and a target temperature to be reached within the elapsed time. Then, the controller 116 controls the temperature of the heater 121 based on the difference between the current actual temperature and the target temperature in the heating profile corresponding to the elapsed time since the start of the current heating. The control on the temperature of the heater 121 can be implemented by, for example, known feedback control. Specifically, the controller 116 causes the electric power from the power supply 111 to be supplied to the heater 121 in the form of a pulse by pulse width modulation (PWM) or pulse frequency modulation (PFM). In this case, the controller 116 can control the temperature of the heater 121 by adjusting the duty ratio of the electric power pulse.

In the feedback control, the controller 116 may control the electric power supplied to the heater 121, for example, the above-described duty ratio, based on the difference or the like between the actual temperature and the target temperature. The feedback control may be, for example, a proportional-integral-differential controller (PID controller). Alternatively, the controller 116 may perform simple ON-OFF control. For example, the controller 116 may execute heating by the heater 121 until the actual temperature reaches the target temperature, stop heating by the heater 121 when the actual temperature has reached the target temperature, and execute heating again by the heater 121 when the actual temperature becomes lower than the target temperature.

The temperature of the heater 121 can be quantified by, for example, measuring or estimating a resistance value (more accurately, an electrical resistance value) of the heater 121 (more accurately, a heat producing resistor constituting the heater 121). This is because the resistance value of the heat producing resistor changes with the temperature. The resistance value of the heat producing resistor can be estimated, for example, by measuring the amount of voltage drop in the heat producing resistor. The amount of voltage drop in the heat producing resistor can be measured by a voltage sensor that measures the potential difference applied to the heat producing resistor. In another example, the temperature of the heater 121 can be measured by a temperature sensor installed near the heater 121.

A time section from the start to the end of processing of generating an aerosol using the stick substrate 150, more specifically, a time section during which the heater 121 operates based on the heating profile is hereinafter also referred to as a heating session. The start of the heating session is a timing at which heating based on the heating profile is started. The end of the heating session is a timing at which a sufficient amount of aerosol is no longer generated. The heating session consists of a preheating period in the former half and a puffable period in the latter half. The puffable period is a period during which a sufficient amount of aerosol is expected to be generated. The preheating period is a period from the start of heating to the start of the puffable period. The heating performed during the preheating period is also referred to as preheating.

An example of the heating profile is presented in Table 1 below.

### [Table 1]

**Table 1. Example of heating profile**

| Time section | Elapsed time since start of heating | Target temperature |
|---|---|---|
| Initial temperature rise section | 25 seconds | 295°C |
| | 35 seconds | 295°C |
| Intermediate temperature drop section | 45 seconds | 230°C |
| Temperature re-rise section | 180 seconds | 230°C |
| | 260 seconds | 260°C |
| | 355 seconds | 260°C |
| Heating end section | Later | - |

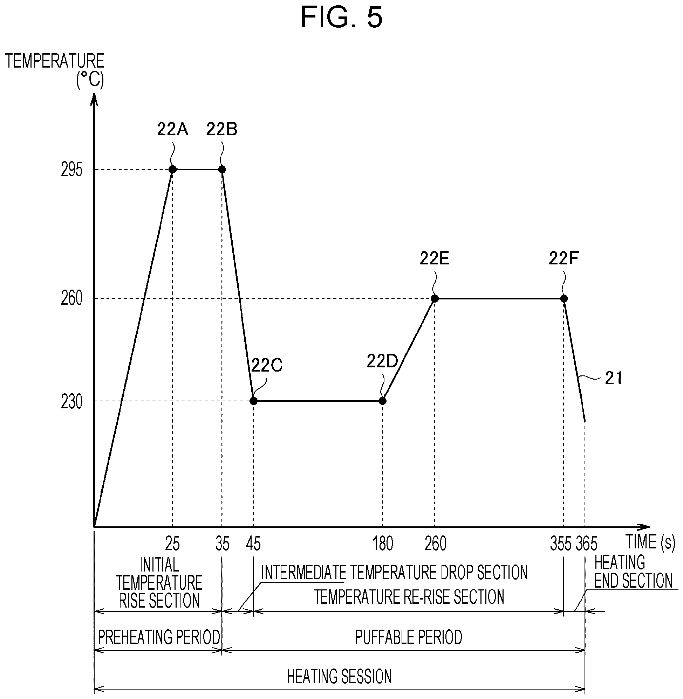

The time-series transition of the actual temperature of the heater 121 when the controller 116 controls the operation of the heater 121 in accordance with the heating profile presented in Table 1 will be described with reference to Fig. 5. Fig. 5 is a graph presenting an example of the time-series transition of the actual temperature of the heater 121 operated based on the heating profile presented in Table 1. The horizontal axis of this graph indicates time (second). The vertical axis of this graph indicates the temperature of the heater 121. A line 21 in this graph indicates a time-series transition of the actual temperature of the heater 121. Also, points 22 (22A to 22F) in this graph indicate target temperatures defined in the heating profile. As presented in Fig. 5, the actual temperature of the heater 121 changes in a manner similar to the time-series transition of the target temperature defined in the heating profile.

As presented in Table 1, the heating profile first includes an initial temperature rise section. The initial temperature rise section is a time section included at the beginning of the heating profile and is a section in which the target temperature set at the end is higher than an initial temperature. The initial temperature is a temperature expected as the temperature of the heater 121 before the start of heating. An example of the initial temperature is any temperature such as 0°C. Another example of the initial temperature is a temperature corresponding to the atmospheric temperature. As presented in Fig. 5, in accordance with the target temperature set in the initial temperature rise section, the actual temperature of the heater 121 reaches 295°C 25 seconds after the start of heating and is maintained at 295°C until 35 seconds after the start of heating. Accordingly, it is expected that the temperature of the stick substrate 150 reaches a temperature at which a sufficient amount of aerosol is generated. By raising the temperature to 295°C at a stroke immediately after the start of heating, it is possible to end the preheating early and start the puffable period early. Although Fig. 5 presents an example in which the initial temperature rise section and the preheating period coincide with each other, the initial temperature rise section and the preheating period may be different from each other.

As presented in Table 1, the heating profile then includes an intermediate temperature drop section. The intermediate temperature drop section is a time section after the initial temperature rise section and is a time section in which the target temperature set at the end is lower than the target temperature set at the end of the initial temperature rise section. As presented in Fig. 5, the actual temperature of the heater 121 drops from 295°C to 230°C from 35 seconds to 45 seconds after the start of heating in accordance with the target temperature set in the intermediate temperature drop section. In such a section, supply of electric power to the heater 121 may be stopped. Even in this case, a sufficient amount of aerosol is generated by the remaining heat of the heater 121 and the stick substrate 150. Here, when the heater 121 is maintained at a high temperature, the aerosol source contained in the stick substrate 150 is rapidly consumed, and there may be an inconvenience that the flavor that the user tastes is too strong. In this regard, it is possible to avoid such an inconvenience and improve the quality of a user's puff experience by providing the temperature drop section in the middle.

As presented in Table 1, the heating profile then includes a temperature re-rise section. The temperature re-rise section is a time section after the intermediate temperature drop section and is a time section in which the target temperature set at the end is higher than the target temperature set at the end of the intermediate temperature drop section. As presented in Fig. 5, the actual temperature of the heater 121 rises stepwise from 230°C to 260°C from 45 seconds to 355 seconds after the start of heating in accordance with the target temperature set in the temperature re-rise section. When the temperature of the heater 121 is continuously decreased, the temperature of the stick substrate 150 is also decreased. Thus, the generation amount of aerosol may be decreased, and the flavor that the user tastes may be deteriorated. In this regard, by raising the temperature again after decreasing the temperature, it is possible to prevent a deterioration of the flavor that the user tastes even in the latter half of the heating session.

As presented in Table 1, the heating profile includes a heating end section at the end. The heating end section is a time section after the temperature re-rise section and is a time section in which heating is not performed. The target temperature does not have to be set. As presented in Fig. 5, the actual temperature of the heater 121 drops 355 seconds after the start of heating. Supply of electric power to the heater 121 may be ended 355 seconds after the start of heating. Even in this case, a sufficient amount of aerosol is generated by the remaining heat of the heater 121 and the stick substrate 150 for a while. In the example presented in Fig. 5, the puffable period, that is, the heating session ends 365 seconds after the start of heating.

The user may be notified of a timing at which the puffable period starts and a timing at which the puffable period ends. Further, the user may be notified of a timing a predetermined time before the end of the puffable period (for example, a timing at which supply of electric power to the heater 121 ends). In this case, the user can puff in the puffable period with reference to the notification.

### - Heating profile related to resistance value

The actual measurement value may be a resistance value of the heater 121. This point will be described below.

As described above, when the resistance value of the heater 121 changes with the temperature of the heater 121, it can be said that the temperature of the heater 121 is synonymous with the resistance value of the heater 121. Thus, the target temperature of the heater 121 can also be indicated by the resistance value of the heater 121. That is, a parameter in the heating profile may be the resistance value of the heater 121 corresponding to the target temperature. In this case, the heating profile is information that defines a time-series transition of a target resistance value that is a target value for the resistance value of the heater 121. The inhaler device 100 controls the resistance value of the heater 121 so that a time-series transition of an actual resistance value of the heater 121 becomes similar to the time-series transition of the target resistance value defined in the heating profile. The control on the resistance value of the heater 121 can be implemented by, for example, known feedback control. Specifically, the controller 116 causes the electric power from the power supply 111 to be supplied to the heater 121 in the form of a pulse by pulse width modulation (PWM) or pulse frequency modulation (PFM). In this case, the controller 116 can control the resistance value of the heater 121 by adjusting the duty ratio of the electric power pulse. With this configuration, it is possible to cause the actual temperature of the heater 121 to transition in a manner similar to the case where the heating profile defines the time-series transition of the target temperature.

Although the temperature of the heater 121 has a correspondence relation to the resistance value of the heater 121, the resistance value corresponding to the temperature of the heater 121 depends on a characteristic of the heater 121 and the environmental temperature. Thus, when the characteristic of the heater 121 or the environmental temperature is different, even though the target temperature is the same, the target resistance value having a correspondence relation to the target temperature becomes a different value.

Hereinafter, an example in which the actual measurement value is the resistance value of the heater 121 and the target value in the heating profile is the target resistance value will be mainly described.

### (3) Cancellation of last one substrate determination function

When the remaining electric power of the power supply 111 is less than a first threshold, the operation controller 251 controls change of the operation setting (that is, the heating profile) of the inhaler device 100. Typically, when the remaining electric power of the power supply 111 is less than the first threshold, the operation controller 251 changes the heating profile of the inhaler device 100. A post-change heating profile is a heating profile with a lower power consumption than that of a pre-change heating profile. Then, the operation controller 251 controls the operation of the heater 121 so as to operate in accordance with the post-change heating profile. Accordingly, the inhaler device 100 generates an aerosol in accordance with the post-change heating profile. The first threshold is set as a value corresponding to a power consumption required for executing processing of generating an aerosol in accordance with the heating profile that has been set (that is, the pre-change heating profile) a prescribed number of times. Specifically, the first threshold is set as a value of the power consumption or more. Note that the power consumption may include an electric power to be consumed for processing other than heating, such as communication and notification performed during heating, in addition to an electric power to be consumed by the heater 121.

The processing of heating the stick substrate 150 to generate the aerosol is executed once for one stick substrate 150. That is, the prescribed number of times corresponds to the number of stick substrates 150 to be consumed. For example, the prescribed number of times is set as the number of stick substrates 150 to be normally consumed when the user takes out and uses the inhaler device 100. An example of the prescribed number of times is 1.

In the technique described in Patent Literature 1 described above, heating is prohibited and the aerosol is not generated when the remaining electric power decreases. In this way, the function of prohibiting heating when the remaining electric power decreases is also referred to as a last one substrate determination function. When the last one substrate determination function is enabled, the aerosol is not generated, and thus the user cannot perform a puff in the first place.

In contrast, the inhaler device 100 according to the present embodiment changes the heating profile while canceling the last one substrate determination function. Thus, even when the remaining electric power decreases to such an extent that it is difficult to generate the aerosol in accordance with the pre-change heating profile, the aerosol can be generated in accordance with the post-change heating profile. That is, when the remaining electric power decreases, it is possible to provide a puff experience at an insufficient but acceptable level as compared with a case where the remaining electric power is sufficient. In this way, it is possible to improve usability in that a puff is possible even when the remaining electric power decreases.

The operation controller 251 determines, as the post-change heating profile, the heating profile corresponding to the remaining electric power of the power supply 111. For example, the operation controller 251 determines, as the post-change heating profile, a heating profile in which the power consumption required for executing the processing of generating the aerosol the prescribed number of times is less than the remaining electric power of the power supply 111. With such a configuration, it is possible to execute heating in accordance with the post-change heating profile up to the end of the prescribed number of times even in a situation in which the remaining electric power decreases.

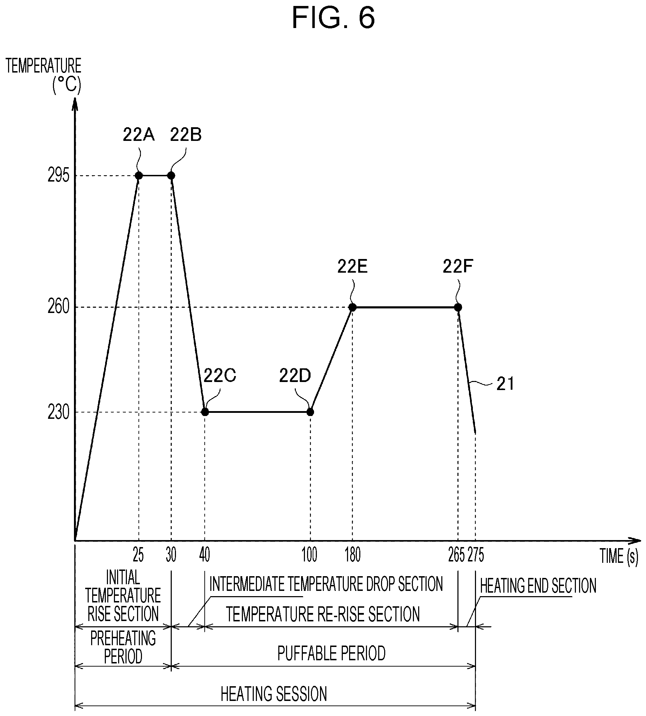

A specific example of switching of the heating profile will be described with reference to Table 2 and Fig. 6. Table 2 presents an example of the post-change heating profile. Fig. 6 is a graph presenting an example of a time-series transition of the actual temperature of the heater 121 operated based on the heating profile presented in Table 2. The horizontal axis of this graph indicates time (second). The vertical axis of this graph indicates the temperature of the heater 121. A line 21 in this graph indicates a time-series transition of the actual temperature of the heater 121. Also, points 22 (22A to 22F) in these graphs indicate target temperatures defined in the heating profile. As presented in Fig. 6, the actual temperature of the heater 121 transitions in a manner similar to the time-series transition of the target temperature defined in the heating profile.

### [Table 2]

**Table 2. Example of post-change heating profile**

| Time section | Elapsed time since start of heating | Target temperature |
|---|---|---|
| Initial temperature rise section | 25 seconds | 295°C |
| | 30 seconds | 295°C |
| Intermediate temperature drop section | 40 seconds | 230°C |
| Temperature re-rise section | 100 seconds | 230°C |
| | 180 seconds | 260°C |
| | 265 seconds | 260°C |
| Heating end section | Later | - |

It is assumed that the heating profile presented in Table 1 is the pre-change heating profile. Comparing Table 1 with Table 2 and comparing Fig. 5 with Fig. 6, it can be seen that the flat portions of the temperature transition are shortened. Consequently, since the heating session is shortened before and after the change, it is possible to reduce the power consumption required for executing heating based on the heating profile once. In addition to or instead of shortening the heating session, a heating profile having a lower target temperature may be determined as the post-change heating profile. In this case as well, it is possible to reduce the power consumption required for executing heating based on the heating profile once.

### - First switching method

The operation controller 251 may determine a heating profile that matches a condition designated by the user as the post-change heating profile. With such a configuration, it is possible not only to reduce the power consumption but also to automatically determine the heating profile preferred by the user as the post-change heating profile.

The condition relates to at least one of a characteristic of the aerosol to be generated, the length of time during which the aerosol can be generated, or the number of times the aerosol can be inhaled when the heater 121 operates in accordance with the post-change heating profile. Examples of the characteristic of the aerosol include the amount of aerosol and the amount of flavoring agent imparted to the aerosol. The length of time during which the aerosol can be generated corresponds to the length of the heating session. The number of times the aerosol can be inhaled is the maximum number of puffs that can be made during the heating session. The maximum number of puffs is a value corresponding to the length of the heating session, which is larger as the heating session is longer and smaller as the heating session is shorter. Typically, as the target temperature increases, the amount of aerosol and the amount of flavoring agent increase and the length of the heating session and the maximum number of puffs decrease. Table 3 presents an example of conditions designated by the user

### [Table 3]

**Table 3. Example of conditions designated by user**

| Label | Default mode | Mild mode | Boost mode |
|---|---|---|---|
| Amount of aerosol and amount of flavoring agent | Medium | Small | Large |
| Length of heating session | 3 minutes | 3.5 minutes | 2.5 minutes |
| Maximum number of puffs | 5 | 6 | 4 |

In the example presented in Table 3, the user can designate one mode from a default mode, a mild mode, or a boost mode, thereby designating the above-described condition related to the determination of the post-change heating profile. For example, when the user designates the mild mode in advance, and when the remaining electric power of the power supply 111 decreases, the heating profile corresponding to the mild mode is automatically determined as the post-change heating profile.

The operation controller 251 may control processing of providing information related to the post-change heating profile. For example, the operation controller 251 causes the outputter 220 to output information related to the determined post-change heating profile. The information related to the post-change heating profile includes at least one of the characteristic of the aerosol to be generated, the length of time during which the aerosol can be generated, or the number of times the aerosol can be inhaled when the generator operates in accordance with the post-change heating profile. For example, it is assumed that the heating profile corresponding to the mild mode presented in Table 3 is determined as the post-change heating profile. In this case, the operation controller 251 causes the outputter 220 to output that the mild mode is determined, the amount of aerosol and the amount of flavoring agent are medium, the length of the heating session is three minutes, and the maximum number of puffs is five times. With such a configuration, the user can know what kind of puff experience can be enjoyed by the post-change heating profile.

### - Second switching method

The operation controller 251 may specify one or more heating profiles corresponding to the remaining electric power of the power supply 111 as candidates for the post-change heating profile. For example, as in the first switching method, the operation controller 251 specifies a heating profile that matches the condition designated by the user as a candidate for the post-change heating profile. Then, the operation controller 251 may determine, as the post-change heating profile, a candidate with consent obtained from the user to be determined as the post-change heating profile among one or more candidates. For example, when the remaining electric power of the power supply 111 decreases, the operation controller 251 specifies the default mode, the mild mode, and the boost mode presented in Table 3 as candidates for the post-change heating profile. Then, the operation controller 251 determines, as the post-change heating profile, a heating profile corresponding to the mode with consent obtained from the user among the modes. With such a configuration, it is possible to determine the heating profile preferred by the user as the post-change heating profile.

The operation controller 251 may control processing of providing information related to the one or more candidates. For example, the operation controller 251 causes the outputter 220 to output information related to the one or more specified candidates. The information related to the candidate includes at least one of the characteristic of the aerosol to be generated, the length of time during which the aerosol can be generated, or the number of times the aerosol can be inhaled when the generator operates in accordance with the candidate. For example, the operation controller 251 causes the outputter 220 to output information indicating that the default mode, the mild mode, or the boost mode presented in Table 3 can be selected as the post-change heating profile. The inputter 210 receives a user's operation of designating one of the default mode, the mild mode, or the boost mode. Then, the operation controller 251 determines the heating profile corresponding to the mode designated by the user as the post-change heating profile. With such a configuration, it is possible to determine the heating profile preferred by the user as the post-change heating profile.

### - Execution of heating with consent obtained

When a first user input is performed, the operation controller 251 may control the operation of the heater 121 so as to operate in accordance with the post-change heating profile. That is, when the first user input is performed, the inhaler device 100 may heat the stick substrate 150 in accordance with the post-change heating profile to generate the aerosol. Performing the first user input corresponds to obtaining consent to the change of the heating profile. With such a configuration, it is possible to execute heating in accordance with the post-change heating profile only when the consent is obtained from the user.

The first user input may be attaching the stick substrate 150 to the inhaler device 100. With such a configuration, the user can start heating in accordance with the post-change heating profile only by inserting the stick substrate 150 into the inhaler device 100. In addition, the first user input may be pressing the switch 13 in a predetermined pressing pattern or the like. Note that the pressing pattern is a concept including the number of times, the interval, and the length of time of pressing the switch 13.

In contrast, when the first input is not performed or when a second user input is performed, the operation controller 251 prohibits the heating profile operation of the heater 121. That is, when the first user input is not performed or when the second user input is performed, the inhaler device 100 does not heat the stick substrate 150. A situation in which the first user input is not performed and the second user input is performed corresponds to a situation in which the consent to the change of the heating profile is obtained. The second user input may be, for example, pressing the switch 13 in a pressing pattern different from that of the first user input. With such a configuration, since heating is not executed when the consent is not obtained from the user, it is possible to prevent wasteful consumption of the substrate.

### - Continuation of last one substrate determination function

When the remaining electric power of the power supply 111 is less than the first threshold and is a second threshold or more, the operation controller 251 changes the heating profile of the inhaler device 100. In contrast, when the remaining electric power of the power supply 111 is less than the second threshold that is smaller than the first threshold, the operation controller 251 prohibits the operation of the heater 121. That is, when the remaining electric power of the power supply 111 is less than the second threshold, the operation controller 251 may stop the cancellation of the last one substrate determination function. The second threshold is set based on the power consumption required for providing the puff experience at the acceptable level described above. For example, the second threshold is set as a value that corresponds to the power consumption required for executing the processing of generating the aerosol the prescribed number of times and that is the lowest power consumption among one or more heating profiles selectable as the post-change heating profile. With such a configuration, when the remaining electric power decreases to such an extent that it is difficult to provide even the puff experience at the acceptable level, it is possible to prevent wasteful consumption of the substrate by prohibiting heating.

The operation controller 251 sets the second threshold based on at least one of the length of time during which the aerosol can be generated or the number of times the aerosol can be inhaled, designated by the user. In an example, the operation controller 251 sets a power consumption required for continuing heating for the length of time designated by the user, as the second threshold. In another example, the operation controller 251 sets a power consumption required for heating to enable the number of puffs designated by the user, as the second threshold. With such a configuration, it is possible to cancel the last one substrate determination function only when it is possible to provide the puff experience at the acceptable level to the user

### (4) Switching of operation mode

### - First/second operation mode

The operation controller 251 may operate in one operation mode of a first operation mode or a second operation mode. The first operation mode is an operation mode in which the last one substrate determination function is canceled. That is, in the case of operating in the first operation mode, the operation controller 251 controls the change of the heating profile when the remaining electric power of the power supply 111 is less than the first threshold. In contrast, the second operation mode is an operation mode in which the last one substrate determination function is not canceled. That is, when operating in the second operation mode, the operation controller 251 prohibits the operation of the heater 121 when the remaining electric power of the power supply 111 is less than the first threshold. Which one of the first operation mode or the second operation mode is used for operation is designated by the user, for example. With such a configuration, it is possible to flexibly switch whether to cancel the last one substrate determination function.

### - Third/fourth operation mode

When operating in the first operation mode, the operation controller 251 may operate in one operation mode of a third operation mode or a fourth operation mode. The third operation mode is an operation mode that uses the first switching method. That is, when operating in the third operation mode, the operation controller 251 determines the heating profile corresponding to the remaining electric power of the power supply 111, as the post-change heating profile without obtaining consent from the user. In contrast, the fourth operation mode is an operation mode that uses the second switching method. That is, when operating in the fourth operation mode, the operation controller 251 determines the heating profile corresponding to the remaining electric power of the power supply 111, as the post-change heating profile with the consent obtained from the user. Which one of the third operation mode or the fourth operation mode is used for operation is designated by the user, for example. With such a configuration, it is possible to flexibly switch whether the consent from the user to the change of the heating profile is required.

### (5) Flow of processing

### - First switching method

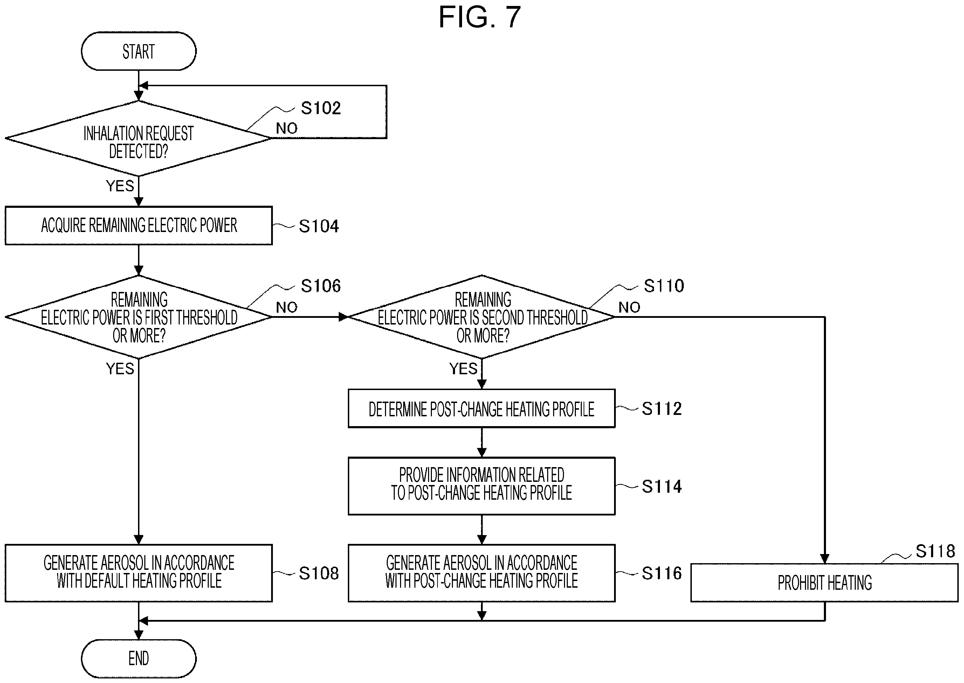

Fig. 7 is a flowchart presenting an example of a flow of processing executed in the system 1 according to the present embodiment. This flow presents a flow of processing when the first switching method is used.

As presented in Fig. 7, first, the operation controller 251 determines whether an inhalation request is detected (step S 102). The inhalation request is a user's operation for requesting generation of an aerosol. An example of the inhalation request is an operation on the inhaler device 100, such as an operation of pressing the switch 13 or an operation of opening the lid 14. Another example of the inhalation request is inserting the stick substrate 150 into the inhaler device 100.

When the inhalation request is not detected (step S102: NO), the operation controller 251 waits until the inhalation request is detected.

When the inhalation request is detected (step S102: YES), the operation controller 251 acquires the remaining electric power of the power supply 111 (step S104).

Next, the operation controller 251 determines whether the remaining electric power of the power supply 111 is the first threshold or more (step S106).

When it is determined that the remaining electric power of the power supply 111 is the first threshold or more (step S106: YES), the operation controller 251 controls the inhaler device 100 to generate the aerosol in accordance with the default heating profile (that is, the pre-change heating profile) (step S108). Then, the processing ends.

In contrast, when it is determined that the remaining electric power of the power supply 111 is less than the first threshold (step S106: NO), the operation controller 251 determines whether the remaining electric power of the power supply 111 is the second threshold or more (step 5110).

When it is determined that the remaining electric power of the power supply 111 is the second threshold or more (step S110: YES), the operation controller 251 determines the post-change heating profile (step S112). At this time, the operation controller 251 determines, as the post-change heating profile, the heating profile corresponding to the remaining electric power of the power supply 111 and matching the condition designated in advance by the user.

Next, the operation controller 251 controls processing of providing information related to the post-change heating profile (step S114). For example, the operation controller 251 causes the outputter 220 to output the information related to the post-change heating profile, the information being exemplified in Table 3.

Then, the operation controller 251 controls the inhaler device 100 to generate the aerosol in accordance with the post-change heating profile (step S116).

When it is determined that the remaining electric power of the power supply 111 is less than the second threshold (step S110: NO), the operation controller 251 prohibits heating by the heater 121 (step S118). Then, the processing ends.

### - Second switching method

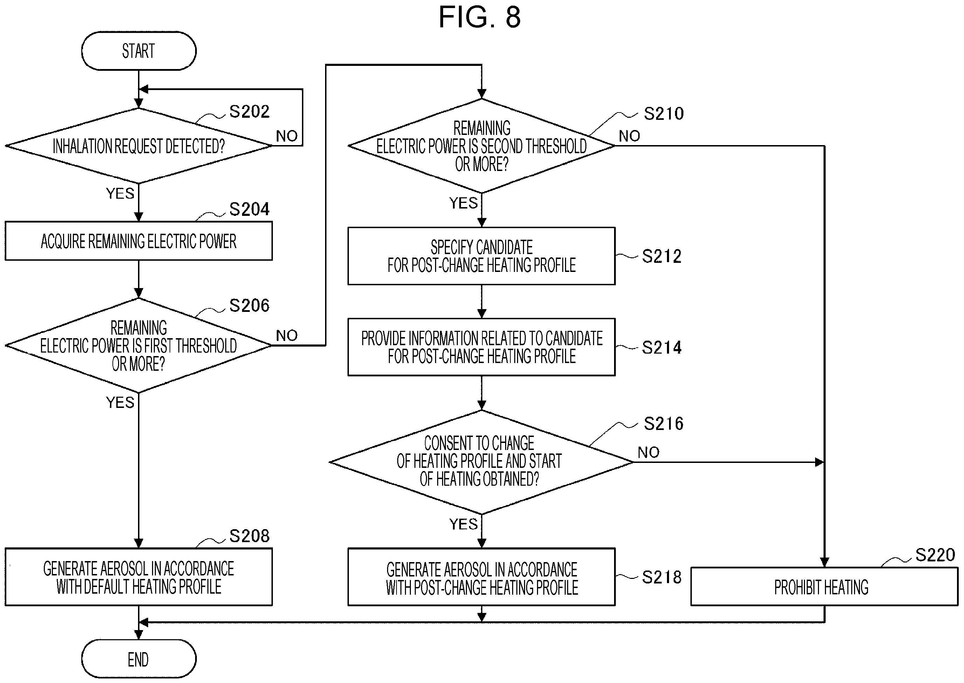

Fig. 8 is a flowchart presenting an example of a flow of processing executed in the system 1 according to the present embodiment. This flow presents a flow of processing when the second switching method is used.

As presented in Fig. 8, first, the operation controller 251 determines whether an inhalation request is detected (step S202).

When the inhalation request is not detected (step S202: NO), the operation controller 251 waits until the inhalation request is detected.

When the inhalation request is detected (step S202: YES), the operation controller 251 acquires the remaining electric power of the power supply 111 (step S204).

Next, the operation controller 251 determines whether the remaining electric power of the power supply 111 is the first threshold or more (step S206).

When it is determined that the remaining electric power of the power supply 111 is the first threshold or more (step S206: YES), the operation controller 251 controls the inhaler device 100 to generate the aerosol in accordance with the default heating profile (that is, the pre-change heating profile) (step S208). Then, the processing ends.

In contrast, when it is determined that the remaining electric power of the power supply 111 is less than the first threshold (step S206: NO), the operation controller 251 determines whether the remaining electric power of the power supply 111 is the second threshold or more (step S210).

When it is determined that the remaining electric power of the power supply 111 is the second threshold or more (step S210: YES), the operation controller 251 specifies one or more heating profiles corresponding to the remaining electric power of the power supply 111 as candidates for the post-change heating profile (step S212).

Next, the operation controller 251 controls processing of providing information related to the candidate for the post-change heating profile (step S214). For example, the operation controller 251 causes the outputter 220 to output the information related to the one or more candidates for the post-change heating profile, the information being exemplified in Table 3.

Next, the operation controller 251 determines whether consent to change of the heating profile and the start of heating is obtained (step S216). For example, the operation controller 251 determines that the consent to the change of the heating profile is obtained when the user's operation for designating the post-change heating profile is performed from among the one or more candidates for the post-change heating profile. Also, when the stick substrate 150 is inserted into the inhaler device 100, the operation controller 251 determines that the consent to the start of heating in accordance with the post-change heating profile is obtained.

When it is determined that the consent to the change of the heating profile and the start of heating is obtained (step S216: YES), the operation controller 251 controls the inhaler device 100 to generate the aerosol in accordance with the post-change heating profile (step S218).

When it is determined that the consent to the change of the heating profile and the start of heating is not obtained (step S216: NO), the operation controller 251 prohibits heating by the heater 121 (step S220). When it is determined that the remaining electric power of the power supply 111 is less than the second threshold (step S210: NO), similarly, the operation controller 251 prohibits heating by the heater 121 (step S220). Then, the processing ends.

### 3. Supplement

Although the preferred embodiments of the present invention have been described in detail with reference to the accompanying drawings, the present invention is not limited to these examples. It will be apparent to those who have ordinary knowledge in the technical field to which the present invention pertains that various changes and modifications can be made within the scope of the technical idea as defined in the appended claims. It is to be understood that the changes and modifications also obviously pertain to the technical scope of the present invention.

For example, although the example in which the inhaler device 100 heats the aerosol source by heating the stick substrate 150 formed as a solid to generate the aerosol has been described in the above-described embodiment, the present invention is not limited to this example. For example, the inhaler device 100 may be of a liquid atomization type that generates an aerosol from an aerosol source as a liquid. In addition to heating, vibration may be used as means for the inhaler device 100 of the liquid atomization type to generate an aerosol. The inhaler device 100 of the liquid atomization type is equipped with a substrate containing an aerosol source as a liquid. Further, the inhaler device 100 of the liquid atomization type may be equipped with a substrate containing a flavor source for imparting a flavor to the aerosol.

In the inhaler device 100 of the liquid atomization type, the operation setting may include a combination of a target temperature indicating a temperature to be reached by the heater 121 and a heating time indicating the length of time during which heating by the heater 121 is continued. In this case, the inhaler device 100 performs heating by the heater 121 such that the temperature of the heater 121 reaches the target temperature during the heating time every time a puff is performed once.

The inhaler device 100 of the liquid atomization type executes processing of generating the aerosol once for one puff action. That is, the prescribed number of times corresponds to the number of puffs. For example, the prescribed number of times is set as the number of puffs that the user normally performs collectively when the user takes out and uses the inhaler device 100. Specifically, when the user takes out and uses the inhaler device 100 and normally performs about ten puffs at a time, the first threshold is set as the amount of electric power that enables heating for ten puffs.

For example, although the example in which the control device including the operation controller 251 is the terminal device 200 has been described in the above-described embodiment, the present invention is not limited to this example. The control device including the operation controller 251 may be any device related to the inhaler device 100. In an example, the operation controller 251 may be provided in the inhaler device 100. In another example, the operation controller 251 may be provided in a server that communicates with the inhaler device 100 or the terminal device 200.

Also, the processing described using the flowcharts and the sequence diagrams in the present description do not have to be executed in the illustrated order. Some of the processing steps may be performed in parallel. Also, an additional processing step may be employed, or the processing steps may be partially omitted.

Note that the series of processing performed by each device described in the present description may be implemented using any of software, hardware, and a combination of software and hardware. A program constituting the software is stored in advance in, for example, a recording medium (non-transitory media) provided inside or outside each device. For example, each program is read into a RAM and executed by a processor such as a CPU at the time of execution by a computer that controls each device described in the present description. The recording medium is, for example, a magnetic disk, an optical disk, a magnetooptical disk, a flash memory, or the like. The computer program may be distributed via a network, for example, without using a recording medium.

The following configurations also pertain to the technical scope of the present invention.
(1) A control device that controls operation of an inhaler device,
   wherein the inhaler device includes
      a power supply that stores and supplies electric power, and
      a generator that generates an aerosol from an aerosol source in accordance with an operation setting, and
   wherein the control device comprises:
      an operation controller that controls change of the operation setting when a remaining electric power of the power supply is less than a first threshold corresponding to a power consumption required for executing processing of generating the aerosol from the aerosol source a prescribed number of times in accordance with the operation setting that has been set.
(2) The control device according to said (1),
   wherein the operation controller determines the operation setting corresponding to the remaining electric power of the power supply as a post-change operation setting.
(3) The control device according to said (2),
   wherein the operation controller determines the operation setting that matches a condition designated by a user as the post-change operation setting.
(4) The control device according to said (3),
   wherein the condition relates to at least one of a characteristic of the aerosol to be generated, a length of time during which the aerosol can be generated, or a number of times the aerosol can be inhaled when the generator operates in accordance with the post-change operation setting.
(5) The control device according to any one of said (2) to (4),
   wherein the operation controller controls processing of providing information related to the post-change operation setting.
(6) The control device according to said (5),
   wherein the information related to the post-change operation setting includes at least one of a characteristic of the aerosol to be generated, a length of time during which the aerosol can be generated, or a number of times the aerosol can be inhaled when the generator operates in accordance with the post-change operation setting.
(7) The control device according to said (2),
   wherein the operation controller specifies one or more operation settings corresponding to the remaining electric power of the power supply as one or more candidates for the post-change operation setting, and determines, as the post-change operation setting, the candidate with consent obtained from a user to be determined as the post-change operation setting among the one or more candidates.
(8) The control device according to said (7),
   wherein the operation controller controls processing of providing information related to the one or more candidates.
(9) The control device according to said (8),
   wherein the information related to the candidate includes at least one of a characteristic of the aerosol to be generated, a length of time during which the aerosol can be generated, or a number of times the aerosol can be inhaled when the generator operates in accordance with the candidate.
(10) The control device according to any one of said (2) to (9),
   wherein the operation controller controls operation of the generator so as to operate in accordance with the post-change operation setting.
(11) The control device according to said (10),
   wherein, when a first user input is performed, the operation controller controls the operation of the generator so as to operate in accordance with the post-change operation setting.
(12) The control device according to said (11),
   wherein the first user input is attaching a substrate to be used for generating the aerosol to the inhaler device.
(13) The control device according to said (11) or (12),
   wherein, when the first user input is not performed or when a second user input is performed, the operation controller prohibits the operation of the generator
(14) The control device according to any one of said (2) to (13),
   wherein the operation controller
   operates in one operation mode of a first operation mode or a second operation mode,
   controls the change of the operation setting when the operation controller operates in the first operation mode and when the remaining electric power of the power supply is less than the first threshold, and
   prohibits the operation of the generator when the operation controller operates in the second operation mode and when the remaining electric power of the power supply is less than the first threshold.
(15) The control device according to said (14),
   wherein the operation controller
   operates in one operation mode of a third operation mode or a fourth operation mode when the operation controller operates in the first operation mode,
   determines the operation setting corresponding to the remaining electric power of the power supply as the post-change operation setting without obtaining consent from a user when the operation controller operates in the third operation mode, and
   determines the operation setting corresponding to the remaining electric power of the power supply as the post-change operation setting with the consent obtained from the user when the operation controller operates in the fourth operation mode.
(16) The control device according to any one of said (1) to (15),
   wherein the operation controller prohibits the operation of the generator when the remaining electric power of the power supply is less than a second threshold that is smaller than the first threshold.
(17) The control device according to said (16),
   wherein the operation controller sets the second threshold based on at least one of a length of time during which the aerosol can be generated or a number of times the aerosol can be inhaled, designated by the user
(18) The control device according to any one of said (1) to (17),
   wherein the operation setting is a setting related to a temperature at which the aerosol source is heated.
(19) A control method for controlling operation of an inhaler device including a power supply that stores and supplies electric power and a generator that generates an aerosol from an aerosol source in accordance with an operation setting, the control method comprising:
   controlling change of the operation setting when a remaining electric power of the power supply is less than a first threshold corresponding to a power consumption required for executing processing of generating the aerosol from the aerosol source a prescribed number of times in accordance with the operation setting that has been set.
(20) A program for causing a computer that controls operation of an inhaler device including a power supply that stores and supplies electric power and a generator that generates an aerosol from an aerosol source in accordance with an operation setting, to execute:
   controlling change of the operation setting when a remaining electric power of the power supply is less than a first threshold corresponding to a power consumption required for executing processing of generating the aerosol from the aerosol source a prescribed number of times in accordance with the operation setting that has been set.

### Reference Signs List

- 1: system
- 11: outer housing
- 11A: top housing
- 11B: bottom housing
- 12: cover
- 13: switch
- 14: lid
- 15: vent
- 16: cap
- 100: inhaler device
- 111: power supply
- 112: sensor
- 113: notifier
- 114: memory
- 115: communicator
- 116: controller
- 121: heater
- 140: holder
- 141: internal space
- 142: opening
- 143: bottom
- 144: heat insulator
- 150: stick substrate
- 151: substrate
- 152: inhalation port
- 200: terminal device
- 210: inputter
- 220: outputter
- 230: communicator
- 240: memory
- 250: controller
- 251: operation controller

## Claims

1. A control device that controls operation of an inhaler device,
wherein the inhaler device includes
a power supply that stores and supplies electric power, and
a generator that generates an aerosol from an aerosol source in accordance with an operation setting, and
wherein the control device comprises:
an operation controller that controls change of the operation setting when a remaining electric power of the power supply is less than a first threshold corresponding to a power consumption required for executing processing of generating the aerosol from the aerosol source a prescribed number of times in accordance with the operation setting that has been set.

2. The control device according to claim 1,
wherein the operation controller determines the operation setting corresponding to the remaining electric power of the power supply as a post-change operation setting.

3. The control device according to claim 2,
wherein the operation controller determines the operation setting that matches a condition designated by a user as the post-change operation setting.

4. The control device according to claim 3,
wherein the condition relates to at least one of a characteristic of the aerosol to be generated, a length of time during which the aerosol can be generated, or a number of times the aerosol can be inhaled when the generator operates in accordance with the post-change operation setting.

5. The control device according to any one of claims 2 to 4,
wherein the operation controller controls processing of providing information related to the post-change operation setting.

6. The control device according to claim 5,
wherein the information related to the post-change operation setting includes at least one of a characteristic of the aerosol to be generated, a length of time during which the aerosol can be generated, or a number of times the aerosol can be inhaled when the generator operates in accordance with the post-change operation setting.

7. The control device according to any one of claims 2 to 6,
wherein the operation controller specifies one or more operation settings corresponding to the remaining electric power of the power supply as one or more candidates for the post-change operation setting, and determines, as the post-change operation setting, the candidate with consent obtained from a user to be determined as the post-change operation setting among the one or more candidates.

8. The control device according to claim 7,
wherein the operation controller controls processing of providing information related to the one or more candidates.

9. The control device according to claim 8,
wherein the information related to the candidate includes at least one of a characteristic of the aerosol to be generated, a length of time during which the aerosol can be generated, or a number of times the aerosol can be inhaled when the generator operates in accordance with the candidate.

10. The control device according to any one of claims 2 to 9,
wherein the operation controller controls operation of the generator so as to operate in accordance with the post-change operation setting.

11. The control device according to claim 10,
wherein, when a first user input is performed, the operation controller controls the operation of the generator so as to operate in accordance with the post-change operation setting.

12. The control device according to claim 11,
wherein the first user input is attaching a substrate to be used for generating the aerosol to the inhaler device.

13. The control device according to claim 11 or 12,
wherein, when the first user input is not performed or when a second user input is performed, the operation controller prohibits the operation of the generator

14. The control device according to any one of claims 2 to 13,
wherein the operation controller
operates in one operation mode of a first operation mode or a second operation mode,
controls the change of the operation setting when the operation controller operates in the first operation mode and when the remaining electric power of the power supply is less than the first threshold, and
prohibits the operation of the generator when the operation controller operates in the second operation mode and when the remaining electric power of the power supply is less than the first threshold.

15. The control device according to claim 14,
wherein the operation controller
operates in one operation mode of a third operation mode or a fourth operation mode when the operation controller operates in the first operation mode,
determines the operation setting corresponding to the remaining electric power of the power supply as the post-change operation setting without obtaining consent from a user when the operation controller operates in the third operation mode, and
determines the operation setting corresponding to the remaining electric power of the power supply as the post-change operation setting with the consent obtained from the user when the operation controller operates in the fourth operation mode.

16. The control device according to any one of claims 1 to 15,
wherein the operation controller prohibits the operation of the generator when the remaining electric power of the power supply is less than a second threshold that is smaller than the first threshold.

17. The control device according to claim 16,
wherein the operation controller sets the second threshold based on at least one of a length of time during which the aerosol can be generated or a number of times the aerosol can be inhaled, designated by the user.

18. The control device according to any one of claims 1 to 17,
wherein the operation setting is a setting related to a temperature at which the aerosol source is heated.

19. A control method for controlling operation of an inhaler device including a power supply that stores and supplies electric power and a generator that generates an aerosol from an aerosol source in accordance with an operation setting, the control method comprising:
controlling change of the operation setting when a remaining electric power of the power supply is less than a first threshold corresponding to a power consumption required for executing processing of generating the aerosol from the aerosol source a prescribed number of times in accordance with the operation setting that has been set.

20. A program for causing a computer that controls operation of an inhaler device including a power supply that stores and supplies electric power and a generator that generates an aerosol from an aerosol source in accordance with an operation setting, to execute:
controlling change of the operation setting when a remaining electric power of the power supply is less than a first threshold corresponding to a power consumption required for executing processing of generating the aerosol from the aerosol source a prescribed number of times in accordance with the operation setting that has been set.
